# FASCICULE DE BREVET EUROPEEN

(11) **EP 3 823 846 B1**
(45) Date de publication et mention de la délivrance du brevet: **08.03.2023**
(21) Numéro de dépôt: 19748872.9
(22) Date de dépôt: 10.07.2019
(51) Int. Cl.: B60C 15/06, B60C 15/04, B60C 15/00, B60C 9/08, B60C 9/02, B60C 9/04

(54) **PNEUMATIQUE DONT LA ZONE DU BOURRELET EST ALLEGEE**
REIFEN MIT GEWICHTSREDUZIERTEM WULSTBEREICH
TYRE HAVING A REDUCED WEIGHT BEAD REGION

(30) Priorité: 17.07.2018 FR 1856600
(43) Date de publication de la demande: 26.05.2021
(73) Titulaire: COMPAGNIE GENERALE DES ETABLISSEMENTS MICHELIN, 63000 Clermont-Ferrand (FR)
(72) Inventeur: BESTGEN, Luc, 63040 CLERMONT-FERRAND Cedex 9 (FR); JOULIN, Emmanuel, 63040 CLERMONT-FERRAND Cedex 9 (FR); GUERBERT-JUBERT, Jean-Luc, 63040 CLERMONT-FERRAND Cedex 9 (FR)
(74) Mandataire: Le Cam, Stéphane Georges Elie
(86) Numéro de dépôt international: PCT/FR2019/051730
(87) Numéro de publication internationale: WO 2020/016503

(56) Documents cités:
- WO-A1-2017/037226
- WO-A1-2018/011509
- FR-A1- 2 864 556
- JP-A- 2011 143 859

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

De tels pneumatiques comportent encore usuellement au niveau des bourrelets une ou plusieurs couches d'éléments de renforcement appelés raidisseurs. Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive. Elles contribuent encore à la protection des zones basses du pneumatique contre les agressions subies lors du montage et du démontage des pneumatiques sur les jantes.

Par ailleurs, dans le cas d'ancrage de l'armature de carcasse réalisé autour d'une tringle, qui consiste à enrouler au moins en partie l'armature de carcasse autour d'une tringle dans chacun des bourrelets en formant un retournement s'étendant plus ou moins haut dans le flanc, les couches d'éléments de renforcement ou raidisseur permettent encore d'éviter ou de retarder le déroulement de l'armature de carcasse lors d'échauffements accidentels et excessifs de la jante.

Ces couches d'éléments de renforcement ou raidisseurs sont le plus souvent disposées axialement à l'extérieur du retournement de l'armature de carcasse et s'étendent sur une hauteur dans le flanc supérieure à celle du retournement notamment pour couvrir les extrémités libres des éléments de renforcement dudit retournement.

De telles conceptions de pneumatiques sont par exemple décrites dans les documents FR 2779387 ou US 2006/0000199.

La présence de ces couches d'éléments de renforcement ou raidisseurs complexifient la conception de ces zones des bourrelets du pneumatique. La présence d'une couche supplémentaire d'une part et son agencement par rapport notamment au retournement de l'armature de carcasse et à la tringle d'autre part conduisent à une conception nécessitant des mélanges caoutchouteux pour séparer les extrémités de couches et assurer le positionnement souhaité des différentes extrémités.

Des conceptions de pneumatiques simplifiées et conduisant à des pneumatiques allégés ont également été décrites par exemple dans le document WO 2018/011509 A1.

Le document WO 2017/037226 décrit encore un allégement des pneumatiques par un choix de câbles d'armature de carcasse fortement pénétrés par des mélanges caoutchouteux.

Les inventeurs se sont ainsi donnés pour mission de fournir des pneumatiques pour véhicules "Poids-Lourds", dont les performances d'endurance notamment l'endurance des zones des bourrelets sont conservées et dont la conception est simplifiée et avantageusement dont la masse globale du pneumatique est diminuée.

Ce but a été atteint selon l'invention par un pneumatique destiné à être monté sur une jante creuse du type « 15° drop centre », comprenant une armature de carcasse radiale, constituée d'une unique couche d'armature de carcasse formée d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, la couche d'éléments de renforcement de l'armature de carcasse étant ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets, ledit retournement de la couche d'armature de carcasse étant séparé de la partie principale de la couche d'armature de carcasse par une première couche de mélange polymérique s'étendant radialement depuis la tringle jusqu'au moins l'extrémité du retournement de la couche d'armature de carcasse, les éléments de renforcement de la couche d'armature de carcasse étant des câbles métalliques dont les fils élémentaires présentent un diamètre inférieur à 0.22 mm, la rigidité de flexion desdits câbles métalliques étant inférieure à 320 N.mm² et, dans une coupe méridienne dudit pneumatique,
- la distance entre l'extrémité du retournement de la couche d'armature de carcasse et le point radialement le plus intérieur du cercle circonscrit à la tringle étant comprise entre 45 et 95% de la distance entre le point axialement le plus extérieur de la partie principale de la couche d'armature de carcasse et le point radialement le plus intérieur du cercle circonscrit à la tringle,
- le retournement de la couche d'armature de carcasse et la partie principale de la couche d'armature de carcasse étant les seules couches d'éléments de renforcement dont l'allongement à rupture est inférieur à 6 % présentes dans une zone du flanc constituant au moins 90% de la surface du flanc comprise radialement entre l'extrémité du retournement de la couche d'armature de carcasse et le point radialement le plus extérieur de la tringle,
- radialement vers l'extérieur, à partir d'un point C du retournement de la couche d'armature de carcasse situé à une distance du point radialement le plus intérieur du cercle circonscrit à la tringle comprise entre 30 et 55% de la distance entre l'extrémité du retournement de la couche d'armature de carcasse et le point radialement le plus intérieur du cercle circonscrit à la tringle, le retournement de la couche d'armature de carcasse et la partie principale de la couche d'armature de carcasse étant couplés,

- le cercle Ce passant par trois points P₁, P₂ et P₃ du retournement de la couche d'armature de carcasse présentant un rayon supérieur à 26 mm avec,
   - P₁, radialement extérieur au point C et tel que la distance entre C et P₁ est égale à 2 mm,
   - P₂, radialement intérieur au point C et tel que la distance entre P₁ et P₂ est égale à 5 mm,
   - P₃, radialement intérieur au point P₂ et tel que la distance entre P₂ et P₃ est égale à 5 mm.

Au sens de l'invention, une jante creuse de type « 15° drop center » ou jante à seat coincé est une jante monobloc, telle que définie dans l'ETRTO, dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de hauteur réduite par rapport à des crochets de jantes à bases plates dont les sièges de jante présentent des formes sensiblement cylindriques.

Les positions des points radialement le plus intérieur et radialement le plus extérieur du cercle circonscrit à la tringle peuvent être déterminées selon une technique de tomographie ou bien sont déterminées sur une coupe d'un pneumatique, dont l'écartement des bourrelets est le même que lorsque le pneumatique est monté sur la jante de montage préconisée par l'ETRTO, celui-ci étant donc ni monté ni gonflé.

Les distances précitées sont mesurées sur un pneumatique monté et gonflé selon les conditions nominales. Ces mesures peuvent par exemple être réalisées selon une technique de tomographie. Concernant la détermination du rayon du cercle Ce, les mesures peuvent également être effectuées sur une coupe du pneumatique en conservant une précision inférieure à 0.05 mm ; en effet, le profil de cette zone ne varie quasiment pas entre l'état libre et l'état monté et gonflé.

Au sens de l'invention, la partie principale de la couche d'armature de carcasse et le retournement de la couche d'armature de carcasse sont dits couplés si les éléments de renforcement respectifs de la partie principale de la couche d'armature de carcasse et du retournement de la couche d'armature de carcasse sont séparés par une épaisseur de mélange caoutchouteux sensiblement constante et d'au plus 5 mm sur une longueur supérieure à 15% de la distance entre l'extrémité du retournement de la couche d'armature de carcasse et le point radialement le plus intérieur du cercle circonscrit à la tringle. L'épaisseur de mélange caoutchouteux séparant les éléments de renforcement respectifs de la partie principale de la couche d'armature de carcasse et du retournement de la couche d'armature de carcasse est mesurée selon la direction normale aux éléments de renforcement de la partie principale de la couche d'armature de carcasse. Avantageusement selon l'invention, les éléments de renforcement respectifs de la partie principale de la couche d'armature de carcasse et du retournement de la couche d'armature de carcasse sont séparés par une épaisseur de mélange caoutchouteux sensiblement constante d'au plus 3.5 mm et de préférence ils sont séparés par une épaisseur de mélange caoutchouteux sensiblement constante d'au moins 0.8 mm et de préférence encore par une épaisseur de mélange caoutchouteux sensiblement constante d'au moins 2.5 mm.

Au sens de l'invention, une épaisseur de mélange caoutchouteux sensiblement constante séparant les éléments de renforcement respectifs de la partie principale de la couche d'armature de carcasse et du retournement de la couche d'armature de carcasse est une épaisseur qui ne varie pas de plus de 0.5 mm. Les variations d'épaisseur ne sont alors dues qu'aux phénomènes de fluage lors de la fabrication et de la cuisson du pneumatique.

Au sens de l'invention, la rigidité de flexion d'un câble est égale à la somme des rigidités de flexion de chacun des fils constituant le câble, ladite rigidité de flexion étant égale à E^{∗}*π*^{∗}D⁴/64, avec E le module d'Young du fil et D le diamètre du fil. Si le câble est un câble fretté, le fil de frette n'est pas pris en compte pour déterminer la rigidité de flexion du câble.

Selon un mode de réalisation préféré de l'invention, la rigidité de flexion desdits câbles métalliques de la couche d'armature de carcasse est inférieure à 250 N.mm².

Les essais ont montré que les pneumatiques ainsi réalisés selon l'invention et dont la masse est inférieure à celle de pneumatiques de conception plus usuelle, comportant par exemple des couches d'éléments de renforcement supplémentaires de type raidisseurs, présentent des performances en termes d'endurance, et notamment en termes d'endurance des zones des bourrelets, au moins aussi bonnes que celles desdits pneumatiques de conception plus usuelle, voire supérieures.

Ces résultats sont d'autant plus surprenants que les conceptions plus usuelles de ce type de pneumatiques comportent un retournement de la couche d'armature de carcasse tel que la distance entre l'extrémité du retournement de la couche d'armature de carcasse et le point radialement le plus intérieur du cercle circonscrit à la tringle est inférieure à 45 % de la distance entre le point axialement le plus extérieur de la partie principale de la couche d'armature de carcasse et le point radialement le plus intérieur du cercle circonscrit à la tringle pour notamment améliorer les performances du pneumatique en termes d'endurance. En effet, il est usuel de concevoir des pneumatiques avec un retournement de la couche d'armature de carcasse de longueur réduite pour augmenter la distance entre le retournement de la couche d'armature de carcasse et la partie principale de la couche d'armature de carcasse, et ainsi limiter au mieux les contraintes de cisaillement qui s'initient entre la partie principale de la couche d'armature de carasse et son retournement notamment du fait des phénomènes de déradialisation qui apparaissent lors du roulage du pneumatique.

Il est encore usuel dans la conception des pneumatiques dont la couche d'armature de carcasse présente un retournement, destinés notamment à être montés sur une jante à seat coincé et à équiper des véhicules portant de lourdes charges, d'éviter un rapprochement et donc d'autant plus un couplage du retournement de la couche d'armature de carcasse avec la partie principale de la couche d'armature de carcasse de façon à prévenir tout risque de cisaillement entre la partie principale de la couche d'armature de carcasse et son retournement qui vient pénaliser la couche de mélange polymérique qui les sépare.

Les inventeurs ont ainsi su mettre en évidence que les pneumatiques réalisés conformément à l'invention et qui présentent notamment un retournement de la couche d'armature de carcasse avec une longueur supérieure aux conceptions plus usuelles, un couplage du retournement de la couche d'armature de carcasse avec la partie principale de la couche d'armature de carcasse, associés à la courbure du retournement de l'armature de carcasse dans la zone de recouplage de celui avec la partie principale de l'armature de carcasse, permettent d'alléger le pneumatique et contre toute attente de conserver des propriétés en termes d'endurance satisfaisantes, voire de les améliorer.

Selon un mode de réalisation préféré de l'invention, le rayon du cercle Ce est inférieur à 40 mm. De telles valeurs du rayon du cercle Ce favorisent encore les performances en termes d'endurance du pneumatique, notamment dans des conditions extrêmes de charge risquant de mettre les éléments de renforcement du retournement de l'armature de carcasse en compression. De préférence encore, le rayon du cercle Ce est inférieur à 36 mm.

Selon une variante de l'invention, les éléments de renforcement métalliques d'au moins une couche de l'armature de carcasse sont des câbles métalliques à couches de construction [L+M] ou [L+M+N] utilisable comme élément de renforcement d'une armature de carcasse de pneumatique, comportant une première couche C1 à L fils de diamètre d₁ avec L allant de 1 à 4, entourée d'au moins une couche intermédiaire C2 à M fils de diamètre d₂ enroulés ensemble en hélice avec M allant de 3 à 12, ladite couche C2 étant éventuellement entourée d'une couche externe C3 de N fils de diamètre d₃ enroulés ensemble en hélice avec N allant de 8 à 20.

De préférence, le diamètre des fils formant les câbles d'au moins une couche de l'armature de carcasse est supérieur à 0.10 mm.

Selon une variante avantageuse de l'invention, les éléments de renforcement métalliques d'au moins une couche de l'armature de carcasse sont des câbles non frettés présentant au test dit de perméabilité un débit inférieur à 20 cm³/mn.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm³/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm³/min, les valeurs mesurées inférieures ou égales à 0,2 cm³/min sont considérées comme nulles ; elles correspondent à un câble qui peut être qualifié d'étanche (totalement étanche) à l'air selon son axe (i.e., dans sa direction longitudinale).

Ce test de perméabilité constitue un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm³/mn présentent un taux de pénétration supérieure à 66%.

Selon un mode de réalisation préféré de cette variante de l'invention, conduisant à une valeur quasi nulle du débit au test dit de perméabilité et donc conduisant à un taux de pénétration supérieur à 90%, les éléments de renforcement métalliques d'au moins une couche de l'armature de carcasse sont des câbles non frettés à au moins deux couches, au moins une couche interne étant gainée d'une couche constituée d'une composition de caoutchouc non réticulable, réticulable ou réticulée, de préférence à base d'au moins un élastomère diénique.

Selon ces variantes de réalisation de l'invention, selon lesquelles l'armature de carcasse est formée de câbles dont la structure est fortement pénétrée de mélanges polymériques soit avec des câbles dont la construction permet d'augmenter leur pénétrabilité par les mélanges polymériques, soit avec des câbles dans lesquels des mélanges polymériques sont insérés lors de la fabrication des câbles eux-mêmes, il est notamment possible d'améliorer encore les performances en termes d'endurance du pneumatique.

Une variante de réalisation de l'invention prévoit que radialement vers l'extérieur à partir dudit point C du retournement de la couche d'armature de carcasse, le retournement de la couche d'armature de carcasse et la partie principale de la couche d'armature de carcasse sont couplés sur une longueur comprise entre 15 et 65% de la distance entre l'extrémité du retournement de la couche d'armature de carcasse et le point radialement le plus intérieur du cercle circonscrit à la tringle, pour être ensuite découplés par la première couche de mélange polymérique jusqu'à l'extrémité du retournement de la couche d'armature de carcasse.

Au sens de l'invention, la partie principale de la couche d'armature de carcasse et le retournement de la couche d'armature de carcasse sont dits découplés si, radialement à l'extérieur de la zone de couplage, l'épaisseur de mélange caoutchouteux séparant les éléments de renforcement respectifs de la partie principale de la couche d'armature de carcasse et du retournement de la couche d'armature de carcasse est supérieure à celle de la zone de couplage. Les éléments de renforcement respectifs de la partie principale de la couche d'armature de carcasse et du retournement de la couche d'armature de carcasse sont alors avantageusement séparés par une épaisseur de mélange caoutchouteux comprise entre 3 et 8 mm, ladite épaisseur de mélange caoutchouteux étant mesurée selon la direction normale aux éléments de renforcement de la partie principale de la couche d'armature de carcasse entre les éléments de renforcement respectifs de la couche la partie principale de la couche d'armature de carcasse et du retournement de la couche d'armature de carcasse. De préférence selon l'invention, dans la zone de découplage, les éléments de renforcement respectifs de la partie principale de la couche d'armature de carcasse et du retournement de la couche d'armature de carcasse sont séparés d'au plus 6 mm et de préférence ils sont séparés d'au moins 4 mm.

Selon un mode de réalisation avantageux de l'invention, la zone de découplage peut être constituée d'une première partie, dite de transition, prolongeant la zone de couplage dans laquelle l'épaisseur de mélange caoutchouteux séparant les éléments de renforcement respectifs de la partie principale de la couche d'armature de carcasse et du retournement de la couche d'armature de carcasse augmente et d'une deuxième partie radialement la plus extérieure dans laquelle l'épaisseur de mélange caoutchouteux séparant les éléments de renforcement respectifs de la partie principale de la couche d'armature de carcasse et du retournement de la couche d'armature de carcasse est sensiblement constante.

Selon cette variante de réalisation de l'invention, l'augmentation de l'épaisseur de la couche de mélange polymérique séparant le retournement de la couche d'armature de carcasse de la partie principale de la couche d'armature de carcasse permet de venir compenser la diminution de la tension dans les éléments de renforcement de l'armature de carcasse lorsque l'on s'approche de l'extrémité de son retournement pour absorber les contraintes de cisaillement entre la partie principale de la couche d'armature de carcasse et son retournement.

Selon une variante de réalisation de l'invention, la couche de mélange polymérique séparant le retournement de la couche d'armature de carcasse de la partie principale de la couche d'armature de carcasse peut être constituée de plusieurs mélanges polymériques dont les propriétés de rigidité et plus spécifiquement dont les modules d'élasticité sous tension à 10 % d'allongement peuvent varier. Dans le cas de plusieurs mélanges polymériques constituant la première couche, ils forment avantageusement un gradient de rigidité décroissant depuis la tringle vers l'extrémité radialement extérieure de ladite première couche.

Avantageusement encore, la longueur de découplage est comprise entre 5 et 50% de la distance entre l'extrémité du retournement de la couche d'armature de carcasse et le point radialement le plus intérieur du cercle circonscrit à la tringle et de préférence comprise entre 15 et 35% de la distance entre l'extrémité du retournement de la couche d'armature de carcasse et le point radialement le plus intérieur du cercle circonscrit à la tringle.

De préférence selon l'invention, le retournement de la couche d'armature de carcasse et la partie principale de la couche d'armature de carcasse sont couplés sur une longueur comprise entre 25 et 40% de la distance entre l'extrémité du retournement de la couche d'armature de carcasse et le point radialement le plus intérieur du cercle circonscrit à la tringle.

Selon un mode de réalisation avantageux de l'invention, dans tout plan méridien, dans chaque bourrelet, le pneumatique comporte une armature de contention entourant la tringle et un volume de mélange caoutchouteux directement au contact de la tringle.

Une telle armature de contention permet lors de l'utilisation du pneumatique de limiter les évolutions de forme de la tringle et ainsi de conserver des performances notamment en termes d'endurance satisfaisantes. En effet, le pneumatique selon l'invention dont la structure conduit à son allègement pourrait, dans certains cas d'utilisation ou types de roulage, conduire à une évolution géométrique dans la zone du bourrelet potentiellement nuisible aux performances en termes d'endurance du pneumatique. La présence d'une armature de contention telle que proposée permet de retarder voire de prévenir une telle évolution géométrique. Avantageusement encore selon l'invention, l'armature de contention est constituée d'une couche d'éléments de renforcement textiles de type polyamide aliphatique.

Avantageusement selon l'invention, les tringles sont des tringles paquets, c'est-à-dire des tringles formées d'un assemblage de fils gommés enroulés autour d'une forme, de préférence de forme hexagonale.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqués précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention notamment en référence aux figures 1 à 3 qui représentent :
- figure1, une vue méridienne d'un schéma d'un pneumatique selon un mode de réalisation de l'invention,
- figure 2, une représentation schématique agrandie de la zone du bourrelet du pneumatique de la figure 1
- figure3, une vue méridienne d'un schéma d'un pneumatique de référence.

Les figures ne sont pas représentées à l'échelle pour en simplifier la compréhension.

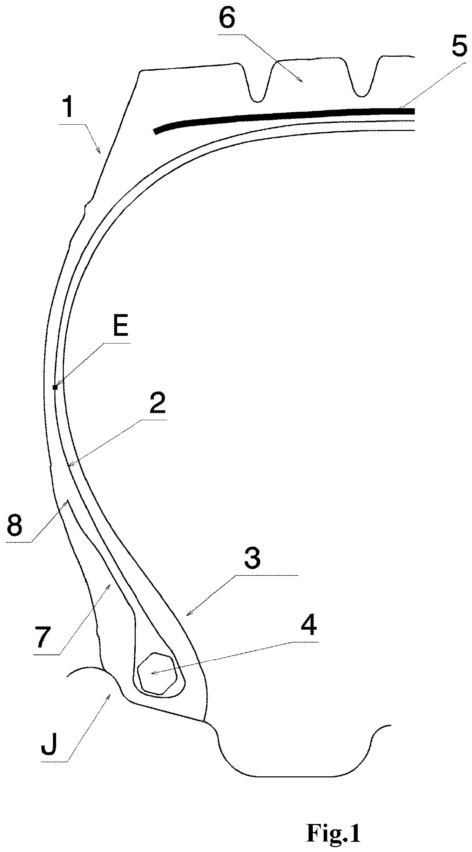

La figure 1 ne représente qu'une demi-vue d'un pneumatique qui se prolonge de manière symétrique par rapport au plan médian circonférentiel, ou plan équatorial, d'un pneumatique.

Sur la figure 1, le pneumatique 1 est de dimension 12 R 22.5. Ledit pneumatique 1 comprend une armature de carcasse radiale 2 ancrée dans deux bourrelets 3. L'armature de carcasse 2 est frettée au sommet du pneumatique par une armature de sommet 5, elle-même coiffée d'une bande de roulement 6.

L'armature de carcasse 2, formée d'une seule couche de câbles métalliques, est enroulée dans chacun des bourrelets 3 autour d'une tringle 4 et forme dans chacun des bourrelets 3 un retournement de la couche d'armature de carcasse 7 présentant une extrémité 8.

Les éléments de renforcements de l'armature de carcasse 2 sont des câbles 19.18 et plus exactement des câbles à couches de structure 1+6+12, non frettés, constitués d'un noyau central formé d'un fil de diamètre d₁ égal à 0.20 mm, d'une couche intermédiaire formée de six fils de diamètre d₂ égal à 0.18 mm et d'une couche externe formée de douze fils de diamètre d₃ égal à 0.18 mm.

La rigidité de flexion du fil constituant le noyau est égal à 15.7 N.mm²

Les rigidités de flexion de chacun des fils constituant la couche intermédiaire et la couche externe sont égaux à 10.3 N.mm².

La rigidité de flexion du câble est donc égale à 201 N.mm² et bien inférieure à 320 N.mm².

La figure 1 illustre le pneumatique monté sur sa jante nominale J ; le point E axialement le plus extérieur de la partie principale de la couche d'armature de carcasse 2 est ainsi déterminé le pneumatique étant gonflé à sa pression nominale, par exemple par tomographie.

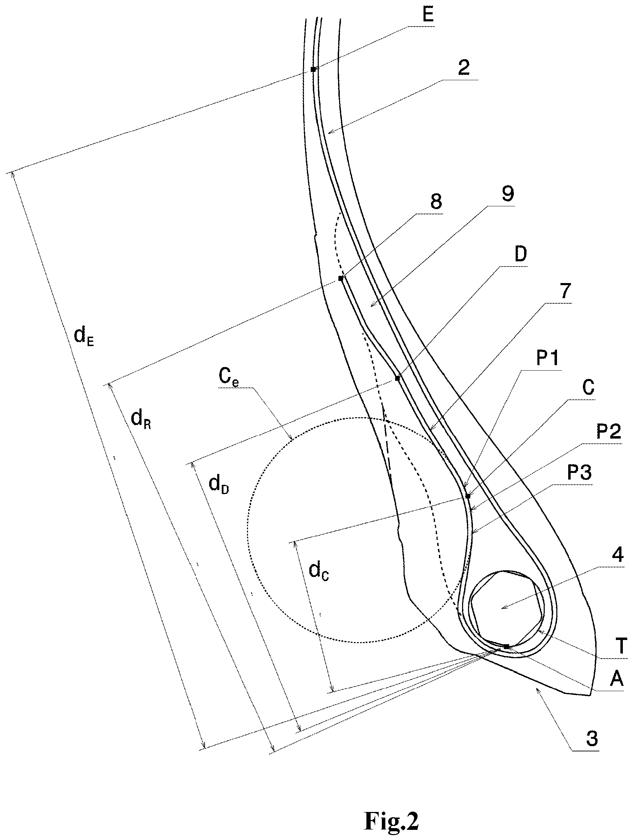

La figure 2 illustre de manière agrandie une représentation schématique en coupe d'un bourrelet 3 du pneumatique dans lequel on retrouve une partie de la couche d'armature de carcasse 2 enroulée autour d'une tringle 4 pour former un retournement 7 avec une extrémité 8.

Sur cette figure 2, est matérialisé le cercle T circonscrit à la tringle 4 et apparaît le point A radialement le plus intérieur dudit cercle T. Ce point A est défini sur une coupe radiale du pneumatique, par exemple par tomographie, le pneumatique étant gonflé à sa pression nominale.

La distance d_{E} entre le point E et le point A est égale à 128 mm.

La distance d_{R} entre le point 8 et le point A est égale à 86 mm.

Le ratio de la distance d_{R} sur la distance d_{E} est égal à 67 % et donc compris entre 45 et 90%.

Le retournement 7 de la couche d'armature de carcasse vient se coupler à la partie principale de la couche d'armature de carcasse 2 à partir du point C, tel que la distance de entre le point C et le point A est égale à 36 mm.

Le ratio de la distance de sur la distance d_{R} est égal à 42 % et donc compris entre 30 et 55%.

Le retournement 7 de la couche d'armature de carcasse est ensuite découplé de la partie principale de la couche d'armature de carcasse 2 à partir du point D, tel que la distance d_{D} entre le point D et le point A est égale à 61 mm et telle que la longueur de couplage entre le point C et le point D est égale à 30 mm et donc comprise entre 25 et 50 % de la distance d_{R}. La longueur de couplage est mesurée selon la droite passant par les points C et D.

L'épaisseur de couplage entre la partie principale de la couche d'armature de carcasse 2 et le retournement 7 de la couche d'armature de carcasse, mesurée selon la direction normale aux éléments de renforcement de la partie principale de la couche d'armature de carcasse 2 entre les éléments de renforcement respectifs de la partie principale de la couche d'armature de carcasse et du retournement de la couche d'armature de carcasse 2, est sensiblement constante et égale à 2.9 mm.

La longueur de découplage entre le point D et le point 8 est égale à 22 mm et donc comprise entre 15 et 35 % de la distance d_{R}. La longueur de découplage est mesurée selon la droite passant par les points D et 8.

Le retournement 7 de la couche d'armature de carcasse 2 est séparé de la partie principale de la couche d'armature de carcasse 2 par une couche de mélange polymérique 9, profilée pour venir en appui sur la tringle 4 et assurer le couplage et découplage entre le retournement de la couche d'armature de carcasse 7 et la partie principale de la couche d'armature de carcasse 2.

Sur la figure 2, est encore représenté le cercle Ce passant par les trois points P₁, P₂ et P₃, tels que :
- P₁, radialement extérieur au point C et tel que la distance entre C et P₁ est égale à 2 mm,
- P₂, radialement intérieur au point C et tel que la distance entre P₁ et P₂ est égale à 5 mm,
- P₃, radialement intérieur au point P₂ et tel que la distance entre P₂ et P₃ est égale à 5 mm.

Le rayon Ce est égal à 30 mm.

Des essais ont été réalisés avec des pneumatiques I1, I2 et I3, réalisés selon l'invention conformément à la représentation des figures 1 et 2, la nature des câbles et des éléments du profil de la carcasse variant.

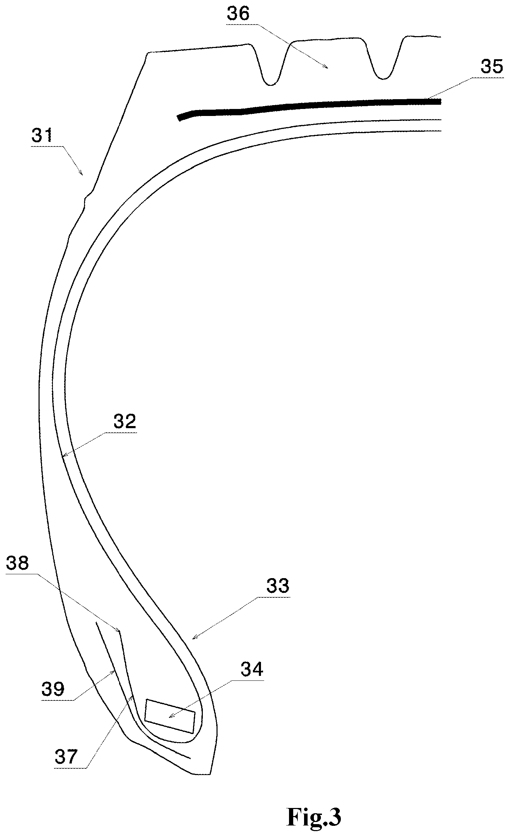

D'autres essais sont réalisés avec des pneumatiques R dits de référence. Ces pneumatiques de référence R diffèrent des pneumatiques selon l'invention par la présence de raidisseurs et une zone du bourrelet plus usuelle avec notamment une distance entre l'extrémité du retournement de la couche d'armature de carcasse et le point radialement le plus intérieur du cercle circonscrit à la tringle égale à 37% de la distance entre le point axialement le plus extérieur de la partie principale de la couche d'armature de carcasse et le point radialement le plus intérieur du cercle circonscrit à la tringle. Un tel profil de pneumatique R est représenté sur la figure 3.

Sur cette figure 3 qui représente un pneumatique 31 de même dimension, il apparaît que la zone du bourrelet 33 que la structure de la couche d'armature de carcasse 32 est retournée autour d'une tringle 34 pour former un retournement 37, présentant une extrémité 38, renforcé par un raidisseur 39.

Enfin, des pneumatiques C1, C2 et C3 réalisés selon des configurations proches de l'invention mais ne satisfaisant pas les critères de celle-ci sont également réalisés et testés. Les rigidités de flexion des câbles et les rayons Ce sont précisés dans le tableau qui suit.

La masse des pneumatique I1 et C1 est égale à 59.7 Kg.

La masse du pneumatique I2 est égale à 60.3 Kg.

La masse du pneumatique I3 est égale à 59.9 Kg.

La masse des pneumatique C2 est égale à 59.6 Kg.

La masse des pneumatique C3 est égale à 59.1 Kg.

La masse du pneumatique R est égale à 62.9 Kg.

Des premières mesures d'endurance des câbles des couches de carcasse en fatigue fretting-corrosion sont réalisés par un test de roulage de longue durée.

Les pneumatiques sont montés sur des jantes adaptées et sont gonflés à la même pression (avec une surpression de 20 % par rapport à la pression nominale) avec de l'air saturé en humidité. On fait ensuite rouler ces pneumatiques sur un volant, sous une charge élevée (20 % de surcharge par rapport à la charge nominale) et à une vitesse de 40 km/h, pendant 100000 kilomètres. A la fin du roulage, on extrait les câbles de la carcasse du pneumatique, par décorticage, et on mesure la force rupture résiduelle sur les câbles ainsi fatigués.

On calcule finalement la déchéance de force-rupture après fatigue (notée ΔFm et exprimée en %), en comparant la force rupture résiduelle à la force rupture initiale. Cette déchéance ΔFm est due à la fatigue et à l'usure (diminution de section) des fils causées par l'action conjointe des diverses sollicitations mécaniques, en particulier de l'intense travail des forces de contact entre les fils, et de l'eau provenant de l'air ambiant, en d'autres termes à la fatigue fretting-corrosion subie par le câble à l'intérieur du pneumatique, lors du roulage.

La déchéance de force-rupture est mesurée sur la partie principale de la couche d'armature de carcasse et sur le retournement de ladite couche de carcasse, dans la partie située radialement à l'extérieur de la tringle et radialement 5 mm à l'intérieur de l'extrémité du retournement.

Les résultats sont présentés ci-après :

| Pneumatique | Structure du câble | d₁ (mm) | d₂ (mm) | d₃ (mm) | Rigidité de flexion (N.mm²) | dc/dr | Rayon Ce (mm) | Déchéance principale | Déchéance retournement |
|---|---|---|---|---|---|---|---|---|---|
| R | 1+6+12 | 0.20 | 0.18 | 0.18 | 201 | - | - | 12% | - |
| I1 | 1+6+12 | 0.20 | 0.18 | 0.18 | 201 | 42 % | 30 | 4% | 8% |
| C1 | 1+6+12 | 0.20 | 0.18 | 0.18 | 201 | 35 % | 22 | 15% | 4% |
| I2 | 1+6+12 | 0.22 | 0.20 | 0.20 | 306 | 45 % | 33 | 4% | 11% |
| C2 | 3+9 | 0.24 | 0.225 | - | 324 | 49 % | 42 | 5% | 16% |
| I3 | 3+9+15 | 0.17 | 0.17 | 0.17 | 221 | 42 % | 32 | 4% | 7% |
| C3 | 3+9 | 0.2 | 0.2 | - | 189 | 42 % | 25 | 13% | 3% |

d1, d2 et d3 sont les diamètres respectifs des fils constituant un câble à couche en partant du centre vers l'extérieur du câble.

Concernant le pneumatique de référence, les mesures ne peuvent pas être faites sur la partie relative au retournement de la couche d'armature de carcasse, celui-ci étant trop court pour permettre d'obtenir des longueurs de câbles suffisantes pour réaliser des mesures.

Les résultats mettent en évidence que les pneumatiques conformes à l'invention (I1, I2 et I3) présentent une déchéance inférieure au pneu de référence R pour la partie principale de la couche d'armature de carcasse.

Les pneumatiques C1 et C3 montrent que la déchéance croît fortement lorsque le rayon de Ce devient inférieur à 26 mm.

Le pneumatique C2 met en évidence qu'une rigidité de flexion des câbles de l'armature de carcasse trop élevée associée à un rayon Ce important conduisent à une déchéance au niveau du retournement inacceptable.

D'autres essais d'endurance ont été réalisés en faisant rouler deux pneus rabotés l'un sur l'autre avec une pression régulée de 8 bars, avec un gonflage à l'azote et une charge de 6786 daN à une vitesse de 30km/h.

Les essais ont été réalisés pour les pneumatiques I1, I2 et I3 selon l'invention avec des conditions identiques à celles appliquées aux pneumatiques de référence R.

Les essais réalisés conduisent pour les pneumatiques de référence R à des performances établissant la base 100. Les tests sont arrêtés lors de l'apparition d'une dégradation de la zone basse du pneumatique.

Les résultats des mesures sont présentés dans le tableau suivant. Ils sont exprimés en distance relative, une valeur de 100 étant attribuée au pneumatique R.

| Pneumatique R | Pneumatique I1 | Pneumatique I2 | Pneumatique I3 |
|---|---|---|---|
| 100 | 230 | 180 | 250 |

Ces résultats mettent en évidence que les pneumatiques selon l'invention améliorent l'endurance sous forte charge sans pénaliser la fatigue fretting-corrosion des câbles de la couche d'armature de carcasse.

## Revendications

1. - Pneumatique (1), destiné à être monté sur une jante creuse du type « 15° drop centre », comprenant une armature de carcasse radiale (2), constituée d'une unique couche d'armature de carcasse formée d'éléments de renforcement, ledit pneumatique (1) comprenant une armature de sommet (5), elle-même coiffée radialement d'une bande de roulement (6), ladite bande de roulement (6) étant réunie à deux bourrelets (3) par l'intermédiaire de deux flancs, la couche d'éléments de renforcement de l'armature de carcasse (2) étant ancrée dans chacun des bourrelets (3) par retournement autour d'une tringle (4) pour former une partie principale de la couche d'armature de carcasse (2) s'étendant d'une tringle (4) à l'autre et un retournement (7) de la couche d'armature de carcasse (2) dans chacun des bourrelets (3), ledit retournement (7) de la couche d'armature de carcasse (2) étant séparé de la partie principale de la couche d'armature de carcasse par une première couche de mélange polymérique (9) s'étendant radialement depuis la tringle (4) jusqu'au moins l'extrémité (8) du retournement (7) de la couche d'armature de carcasse (2), dans une coupe méridienne dudit pneumatique,
- la distance entre l'extrémité (8) du retournement (7) de la couche d'armature de carcasse (2) et le point radialement le plus intérieur (A) du cercle (T) circonscrit à la tringle (4) est comprise entre 45 et 95 % de la distance entre le point (E) axialement le plus extérieur de la partie principale de la couche d'armature de carcasse (2) et le point radialement le plus intérieur (A) du cercle (T) circonscrit à la tringle (4),
- le retournement (7) de la couche d'armature de carcasse (2) et la partie principale de la couche d'armature de carcasse (2) sont les seules couches d'éléments de renforcement dont l'allongement à rupture est inférieur à 6 % présentes dans une zone du flanc constituant au moins 90% de la surface du flanc comprise radialement entre l'extrémité (8) du retournement de la couche d'armature de carcasse (2) et le point radialement le plus extérieur de la tringle (4),
- radialement vers l'extérieur, à partir d'un point (C) du retournement (7) de la couche d'armature de carcasse (2) situé à une distance du point (A) radialement le plus intérieur du cercle (T) circonscrit à la tringle (4) comprise entre 30 et 55% de la distance entre l'extrémité (8) du retournement (7) de la couche d'armature de carcasse (2) et le point (A) radialement le plus intérieur du cercle (T) circonscrit à la tringle (4), le retournement (7) de la couche d'armature de carcasse et la partie principale de la couche d'armature de carcasse sont couplés, tels que les éléments de renforcement respectifs de la partie principale de la couche d'armature de carcasse et du retournement de la couche d'armature de carcasse sont séparés par une épaisseur de mélange caoutchouteux sensiblement constante et d'au plus 5 mm,
**caractérisé en ce que** les éléments de renforcement de la couche d'armature de carcasse (2) sont des câbles métalliques dont les fils élémentaires présentent un diamètre inférieur à 0.22 mm, **en ce que** la rigidité de flexion desdits câbles est inférieure à 320 N/mm2 et **en ce que**, dans une coupe méridienne dudit pneumatique,
- le cercle (Ce) passant par trois points (P₁), (P₂) et (P₃) du retournement de la couche d'armature de carcasse présente un rayon supérieur à 26 mm avec
- (P₁), radialement extérieur au point (C) et tel que la distance entre (C) et (P₁) est égale à 2 mm,
- (P₂), radialement intérieur au point (C) et tel que la distance entre (P₁) et (P₂) est égale à 5 mm,
- (P₃), radialement intérieur au point (P₂) et tel que la distance entre (P₂) et (P₃) est égale à 5 mm.

2. - Pneumatique (1) selon la revendication 1, **caractérisé en ce que** le rayon du cercle (Ce) est inférieur à 40 mm et de préférence inférieur à 36 mm.

3. - Pneumatique (1) selon la revendication 1 ou 2, **caractérisé en ce que** les éléments de renforcement métalliques d'au moins une couche de l'armature de carcasse (2) sont des câbles métalliques à couches de construction [L+M] ou [L+M+N] utilisable comme élément de renforcement d'une armature de carcasse de pneumatique, comportant une première couche (C1) à L fils de diamètre d₁ avec L allant de 1 à 4, entourée d'au moins une couche intermédiaire (C2) à M fils de diamètre d₂ enroulés ensemble en hélice avec M allant de 3 à 12, ladite couche (C2) étant éventuellement entourée d'une couche externe (C3) de N fils de diamètre d₃ enroulés ensemble en hélice avec N allant de 8 à 20.

4. - Pneumatique (1) selon l'une des revendications 1 à 3, **caractérisé en ce que** le diamètre des fils formant les câbles d'au moins une couche de l'armature de carcasse (2) est supérieur à 0.10 mm.

5. - Pneumatique (1) selon l'une des revendications précédentes, **caractérisé en ce que** les éléments de renforcement métalliques d'au moins une couche de l'armature de carcasse (2) sont des câbles non frettés présentant au test dit de perméabilité selon la norme ASTM D2692-98 un débit inférieur à 20 cm³/mn.

6. - Pneumatique (1) selon l'une des revendications 1 à 4, **caractérisé en ce que** les éléments de renforcement métalliques d'au moins une couche de l'armature de carcasse (2) sont des câbles non frettés à au moins deux couches, au moins une couche interne étant gainée d'une couche constituée d'une composition de caoutchouc non réticulable, réticulable ou réticulée, de préférence à base d'au moins un élastomère diénique.

7. - Pneumatique (1) selon l'une des revendications précédentes, **caractérisé en ce que** radialement vers l'extérieur à partir dudit point (C) du retournement de la couche d'armature de carcasse (2), le retournement (7) de la couche d'armature de carcasse (2) et la partie principale de la couche d'armature de carcasse (2) sont couplés sur une longueur comprise entre 15 et 65% de la distance entre l'extrémité (8) du retournement (7) de la couche d'armature de carcasse (2) et le point radialement (A) le plus intérieur du cercle circonscrit à la tringle (4), pour être ensuite découplés par la première couche de mélange polymérique (9) jusqu'à l'extrémité (8) du retournement (7) de la couche d'armature de carcasse (2), de sorte que l'épaisseur de mélange caoutchouteux séparant les éléments de renforcement respectifs de la partie principale de la couche d'armature de carcasse et du retournement de la couche d'armature de carcasse est supérieure à celle de la zone de couplage.

8. - Pneumatique (1) selon la revendication 7, **caractérisé en ce que** la longueur de découplage est comprise entre 5 et 40 % de la distance entre l'extrémité (8) du retournement (7) de la couche d'armature de carcasse (2) et le point (A) radialement le plus intérieur du cercle (T) circonscrit à la tringle (4) et de préférence comprise entre 15 et 35 % de la distance entre l'extrémité (8) du retournement (7) de la couche d'armature de carcasse (2) et le point (A) radialement le plus intérieur du cercle (T) circonscrit à la tringle (4).

9. - Pneumatique (1) selon l'une des revendications précédentes, **caractérisé en ce que** le retournement (7) de la couche d'armature de carcasse (2) et la partie principale de la couche d'armature de carcasse (2) sont couplés sur une longueur comprise entre 25 et 40% de la distance entre l'extrémité (8) du retournement (7) de la couche d'armature de carcasse (2) et le point (A) radialement le plus intérieur du cercle (T) circonscrit à la tringle (4).

10. - Pneumatique (1) selon l'une des revendications précédentes, **caractérisé en ce que,** dans tout plan méridien, dans chaque bourrelet (3), le pneumatique (1) comporte une armature de contention entourant la tringle et un volume de mélange caoutchouteux directement au contact de la tringle (4), ladite armature de contention étant de préférence constituée d'une couche d'éléments de renforcement textiles de type polyamide aliphatique.

## Patentansprüche

1. Luftreifen (1), der dazu bestimmt ist, auf einer Tiefbettfelge vom Typ "15° drop centre" montiert zu werden, umfassend eine radiale Karkassenbewehrung (2), die aus einer einzigen Karkassenbewehrungslage besteht, die aus Verstärkungselementen gebildet ist, wobei der Luftreifen (1) eine Scheitelbewehrung (5) umfasst, die wiederum radial von einem Laufstreifen (6) überdeckt wird, wobei der Laufstreifen (6) über zwei Flanken mit zwei Wülsten (3) verbunden ist, wobei die Lage aus Verstärkungselementen der Karkassenbewehrung (2) in jeder der Wülste (3) durch Umschlagen um einen Wulstkern (4) herum verankert ist, um einen Hauptteil der Karkassenbewehrungslage (2), der sich von einem Wulstkern (4) zum anderen erstreckt, und einen Umschlag (7) der Karkassenbewehrungslage (2) in jeder der Wülste (3) zu bilden, wobei der Umschlag (7) der Karkassenbewehrungslage (2) von dem Hauptteil der Karkassenbewehrungslage durch eine erste Polymergemischlage (9) getrennt ist, die sich radial von dem Wulstkern (4) aus bis mindestens zum Ende (8) des Umschlags (7) der Karkassenbewehrungslage (2) erstreckt, in einem Meridianschnitt des Luftreifens,
- der Abstand zwischen dem Ende (8) des Umschlags (7) der Karkassenbewehrungslage (2) und dem radial innersten Punkt (A) des dem Wulstkern (4) umschriebenen Kreises (T) zwischen 45 und 95 % des Abstands zwischen dem axial äußersten Punkt (E) des Hauptteils der Karkassenbewehrungslage (2) und dem radial innersten Punkt (A) des dem Wulstkern (4) umschriebenen Kreises (T) beträgt,
- der Umschlag (7) der Karkassenbewehrungslage (2) und der Hauptteil der Karkassenbewehrungslage (2) die einzigen Lagen aus Verstärkungselementen mit einer Bruchdehnung von weniger als 6 % sind, die in einem Bereich der Flanke vorhanden sind, der mindestens 90 % der Fläche der Flanke darstellt, die radial zwischen dem Ende (8) des Umschlags der Karkassenbewehrungslage (2) und dem radial äußersten Punkt des Wulstkerns (4) enthalten ist,
- radial nach außen hin von einem Punkt (C) des Umschlags (7) der Karkassenbewehrungslage (2) aus, der in einem Abstand vom radial innersten Punkt (A) des dem Wulstkern (4) umschriebenen Kreises (T) zwischen 30 und 55 % des Abstands zwischen dem Ende (8) des Umschlags (7) der Karkassenbewehrungslage (2) und dem radial innersten Punkt (A) des dem Wulstkern (4) umschriebenen Kreises (T) gelegen ist, der Umschlag (7) der Karkassenbewehrungslage und der Hauptteil der Karkassenbewehrungslage gekoppelt sind, so dass die jeweiligen Verstärkungselemente des Hauptteils der Karkassenbewehrungslage und des Umschlags der Karkassenbewehrungslage durch eine Kautschukgemischdicke getrennt sind, die im Wesentlichen konstant ist und höchstens 5 mm beträgt,
**dadurch gekennzeichnet, dass** die Verstärkungselemente der Karkassenbewehrungslage (2) Metallseile sind, deren elementare Drähte einen Durchmesser von weniger als 0,22 mm aufweisen, dass die Biegesteifigkeit der Seile weniger als 320 N/mm2 beträgt und dass, in einem Meridianschnitt des Luftreifens,
- der durch die drei Punkte (P₁), (P₂) und (P₃) des Umschlags der Karkassenbewehrungslage verlaufende Kreis (Ce) einen Radius von mehr als 26 mm aufweist mit
- (P₁) radial außerhalb des Punkts (C) und so, dass der Abstand zwischen (C) und (P₁) 2 mm beträgt,
- (P₂) radial innerhalb des Punkts (C) und so, dass der Abstand zwischen (P₁) und (P₂) 5 mm beträgt,
- (P₃) radial innerhalb des Punkts (P₂) und so, dass der Abstand zwischen (P₂) und (P₃) 5 mm beträgt.

2. Luftreifen (1) nach Anspruch 1, **dadurch gekennzeichnet, dass** der Radius des Kreises (Ce) weniger als 40 mm und bevorzugt weniger als 36 mm beträgt.

3. Luftreifen (1) nach Anspruch 1 oder 2, **dadurch gekennzeichnet, dass** die metallischen Verstärkungselemente mindestens einer Lage der Karkassenbewehrung (2) Metallseile aus Lagen mit dem Aufbau [L+M] oder [L+M+N] sind, die als Verstärkungselement einer Luftreifenkarkassenbewehrung verwendbar sind, beinhaltend eine erste Lage (C1) aus L Drähten mit dem Durchmesser d₁, mit L von 1 bis 4, die von mindestens einer Zwischenlage (C2) aus M Drähten mit dem Durchmesser d₂ umgeben ist, die schraubenförmig zusammen aufgewickelt sind, mit M von 3 bis 12, wobei die Lage (C2) gegebenenfalls von einer äußeren Lage (C3) aus N Drähten mit dem Durchmesser d₃ umgeben ist, die schraubenförmig zusammen aufgewickelt sind, mit N von 8 bis 20.

4. Luftreifen (1) nach einem der Ansprüche 1 bis 3, **dadurch gekennzeichnet, dass** der Durchmesser der Drähte, die die Seile mindestens einer Lage der Karkassenbewehrung (2) bilden, größer als 0,10 mm ist.

5. Luftreifen (1) nach einem der vorhergehenden Ansprüche, **dadurch gekennzeichnet, dass** die metallischen Verstärkungselemente mindestens einer Lage der Karkassenbewehrung (2) nicht bandagierte Seile sind, die bei dem sogenannten Permeabilitätstest nach der Norm D2692-98 einen Durchsatz von weniger als 20 cm³/min aufweisen.

6. Luftreifen (1) nach einem der Ansprüche 1 bis 4, **dadurch gekennzeichnet, dass** die metallischen Verstärkungselemente mindestens einer Lage der Karkassenbewehrung (2) nicht bandagierte Seile aus mindestens zwei Lagen sind, wobei mindestens eine innere Lage von einer Lage umhüllt ist, die aus einer nicht vernetzbaren, vernetzbaren oder vernetzten Kautschukzusammensetzung besteht, bevorzugt auf der Basis mindestens eines Dienelastomers.

7. Luftreifen (1) nach einem der vorhergehenden Ansprüche, **dadurch gekennzeichnet, dass** radial nach außen hin von dem Punkt (C) des Umschlags der Karkassenbewehrungslage (2) aus der Umschlag (7) der Karkassenbewehrungslage (2) und der Hauptteil der Karkassenbewehrungslage (2) über eine Länge zwischen 15 und 65 % des Abstands zwischen dem Ende (8) des Umschlags (7) der Karkassenbewehrungslage (2) und dem radial innersten Punkt (A) des dem Wulstkern (4) umschriebenen Kreises gekoppelt sind, um anschließend durch die erste Polymergemischlage (9) bis zum Ende (8) des Umschlags (7) der Karkassenbewehrungslage (2) entkoppelt zu werden, so dass die Kautschukgemischdicke, die die jeweiligen Verstärkungselemente des Hauptteils der Karkassenbewehrungslage und des Umschlags der Karkassenbewehrungslage trennt, größer als die des Kopplungsbereichs ist.

8. Luftreifen (1) nach Anspruch 7, **dadurch gekennzeichnet, dass** die Entkopplungslänge zwischen 5 und 40 % des Abstands zwischen dem Ende (8) des Umschlags (7) der Karkassenbewehrungslage (2) und dem radial innersten Punkt (A) des dem Wulstkern (4) umschriebenen Kreises (T) und bevorzugt zwischen 15 und 35 % des Abstands zwischen dem Ende (8) des Umschlags (7) der Karkassenbewehrungslage (2) und dem radial innersten Punkt (A) des dem Wulstkern (4) umschriebenen Kreises (T) beträgt.

9. Luftreifen (1) nach einem der vorhergehenden Ansprüche, **dadurch gekennzeichnet, dass** der Umschlag (7) der Karkassenbewehrungslage (2) und der Hauptteil der Karkassenbewehrungslage (2) über eine Länge zwischen 25 und 40 % des Abstands zwischen dem Ende (8) des Umschlags (7) der Karkassenbewehrungslage (2) und dem radial innersten Punkt (A) des dem Wulstkern (4) umschriebenen Kreises (T) gekoppelt sind.

10. Luftreifen (1) nach einem der vorhergehenden Ansprüche, **dadurch gekennzeichnet, dass** in jeder Meridianebene in jeder Wulst (3) der Luftreifen (1) eine den Wulstkern umgebende Stützbewehrung und ein Kautschukgemischvolumen direkt in Kontakt mit dem Wulstkern (4) beinhaltet, wobei die Stützbewehrung bevorzugt aus einer Lage aus textilen Verstärkungselementen vom Typ aliphatisches Polyamid besteht.

## Claims

1. -Tyre (1) intended to be mounted on a hollow rim of the 15° drop centre type, comprising a radial carcass reinforcement (2) made up of a single carcass reinforcement layer formed of reinforcing elements, said tyre (1) comprising a crown reinforcement (5), itself capped radially by a tread (6), said tread (6) being joined to two beads (3) via two sidewalls, the layer of reinforcing elements of the carcass reinforcement (2) being anchored in each of the beads (3) by being turned up around a bead wire (4) so as to form a main part of the carcass reinforcement layer (2) extending from one bead wire (4) to the other and a turn-up (7) of the carcass reinforcement layer (2) in each of the beads (3), said turn-up (7) of the carcass reinforcement layer (2) being separated from the main part of the carcass reinforcement layer by a first layer (9) of polymer compound extending radially from the bead wire (4) to at least the end (8) of the turn-up (7) of the carcass reinforcement layer (2), in a meridian cross section of said tyre,
- the distance between the end (8) of the turn-up (7) of the carcass reinforcement layer (2) and the radially innermost point (A) of the circle (T) circumscribed on the bead wire (4) is between 45 and 95% of the distance between the axially outermost point (E) of the main part of the carcass reinforcement layer (2) and the radially innermost point (A) of the circle (T) circumscribed on the bead wire (4),
- the turn-up (7) of the carcass reinforcement layer (2) and the main part of the carcass reinforcement layer (2) are the only layers of reinforcing elements, of which the elongation at break is less than 6%, that are present in a sidewall region making up at least 90% of the surface area of the sidewall comprised radially between the end (8) of the turn-up of the carcass reinforcement layer (2) and the radially outermost point of the bead wire (4),
- radially towards the outside, starting from a point (C) of the turn-up (7) of the carcass reinforcement layer (2) that is situated at a distance from the radially innermost point (A) of the circle (T) circumscribed on the bead wire (4) of between 30 and 55% of the distance between the end (8) of the turn-up (7) of the carcass reinforcement layer (2) and the radially innermost point (A) of the circle (T) circumscribed on the bead wire (4), the turn-up (7) of the carcass reinforcement layer and the main part of the carcass reinforcement layer are coupled, such as the respective reinforcing elements of the main part of the carcass reinforcement layer and of the turn-up of the carcass reinforcement layer are separated by a thickness of rubber compound that is substantially constant and at most 5 mm, **characterized in that** the reinforcing elements of the carcass reinforcement layer (2) are metal cords, the elementary threads of which have a diameter less than 0.22 mm, **in that** the bending stiffness of said cords is less than 320 N/mm², and **in that,** in a meridian cross section of said tyre,
- the circle (Ce) passing through three points (P₁), (P₂) and (P₃) of the turn-up of the carcass reinforcement layer has a radius greater than 26 mm, where
- (P₁) is radially on the outside of the point (C), such that the distance between (C) and (P₁) is equal to 2 mm,
- (P₂) is radially on the inside of the point (C), such that the distance between (P₁) and (P₂) is equal to 5 mm,
- (P₃) is radially on the inside of the point (P₂), such that the distance between (P₂) and (P₃) is equal to 5 mm.

2. - Tyre (1) according to Claim 1, **characterized in that** the radius of the circle (Ce) is less than 40 mm and preferably less than 36 mm.

3. - Tyre (1) according to Claim 1 or 2, **characterized in that** the metal reinforcing elements of at least one layer of the carcass reinforcement (2) are layered metal cords of [L+M] or [L+M+N] construction that are usable as reinforcing element in a tyre carcass reinforcement, having a first layer (C1) of L threads of diameter d₁, where L ranges from 1 to 4, surrounded by at least one intermediate layer (C2) of M threads of diameter d₂ wound together in a helix, where M ranges from 3 to 12, said layer (C2) optionally being surrounded by an external layer (C3) of N threads of diameter d₃ wound together in a helix, where N ranges from 8 to 20.

4. - Tyre (1) according to one of Claims 1 to 3, **characterized in that** the diameter of the threads forming the cords of at least one layer of the carcass reinforcement (2) is greater than 0.10 mm.

5. - Tyre (1) according to one of the preceding claims, **characterized in that** the metal reinforcing elements of at least one layer of the carcass reinforcement (2) are non-wrapped cords that have a flow rate less than 20 cm3/min in what is referred to as the permeability test according to the standard ASTM D2692-98.

6. - Tyre (1) according to one of Claims 1 to 4, **characterized in that** the metal reinforcing elements of at least one layer of the carcass reinforcement (2) are non-wrapped cords having at least two layers, at least one internal layer being sheathed with a layer made of a rubber composition that is not crosslinkable, is crosslinkable or is crosslinked, preferably based on at least one diene elastomer.

7. - Tyre (1) according to one of the preceding claims, **characterized in that** radially towards the outside, starting from said point (C) of the turn-up of the carcass reinforcement layer (2), the turn-up (7) of the carcass reinforcement layer (2) and the main part of the carcass reinforcement layer (2) are coupled along a length of between 15 and 65% of the distance between the end (8) of the turn-up (7) of the carcass reinforcement layer (2) and the radially innermost point (A) of the circle circumscribed on the bead wire (4), and are then decoupled by the first layer of polymer compound (9) as far as the end (8) of the turn-up (7) of the carcass reinforcement layer (2), such as the thickness of rubber compound separating the respective reinforcing elements of the main part of the carcass reinforcement layer and of the turn-up of the carcass reinforcement layer is greater than that of the coupling zone.

8. - Tyre (1) according to Claim 7, **characterized in that** the decoupling length is between 5 and 40% of the distance between the end (8) of the turn-up (7) of the carcass reinforcement layer (2) and the radially innermost point (A) of the circle (T) circumscribed on the bead wire (4) and is preferably between 15 and 35% of the distance between the end (8) of the turn-up (7) of the carcass reinforcement layer (2) and the radially innermost point (A) of the circle (T) circumscribed on the bead wire (4).

9. - Tyre (1) according to one of the preceding claims, **characterized in that** the turn-up (7) of the carcass reinforcement layer (2) and the main part of the carcass reinforcement layer (2) are coupled along a length of between 25 and 40% of the distance between the end (8) of the turn-up (7) of the carcass reinforcement layer (2) and the radially innermost point (A) of the circle (T) circumscribed on the bead wire (4).

10. - Tyre (1) according to one of the preceding claims, **characterized in that,** in every meridian plane, in each bead (3), the tyre (1) has a retention reinforcement surrounding the bead wire and a volume of rubber compound in direct contact with the bead wire (4), said retention reinforcement preferably being made up of a layer of textile reinforcing elements of the aliphatic polyamide type.
